# EUROPÄISCHE PATENTSCHRIFT

(11) **EP 1 029 498 B1**
(45) Veröffentlichungstag und Bekanntmachung des Hinweises auf die Patenterteilung: **09.07.2008**
(21) Anmeldenummer: 00101983.5
(22) Anmeldetag: 01.02.2000
(51) Int. Cl.: A47L 15/42, F04D 15/00, A47L 15/46

(54) **Haushalt-Geschirrspülmaschine**
Household dishwasher
Machine à laver la vaisselle à usage domestique

(30) Priorität: 19.02.1999 DE 19907189
(43) Veröffentlichungstag der Anmeldung: 23.08.2000
(73) Patentinhaber: BSH Bosch und Siemens Hausgeräte GmbH, 81739 München (DE)
(72) Erfinder: Stickel, Ernst, 89537 Giengen (DE); Jerg, Helmut, 89537 Giengen (DE); Rosenbauer, Michael, 86756 Reimlingen (DE); Schessl, Bernd, 89407 Dillingen (DE)

(56) Entgegenhaltungen:
- EP-A- 0 619 431
- EP-A- 0 677 800
- EP-A- 0 829 220
- CA-A- 2 186 797
- DE-A- 4 418 721

## Beschreibung

Die Erfindung betrifft eine Haushalt-Geschirrspülmaschine nach dem Oberbegriff des Patentanspruchs 1.

Handelsübliche Haushalt-Geschirrspülmaschinen weisen üblicherweise wenigstens eine Umwälzpumpe zur Förderung von Spülflüssigkeit zu wenigstens zwei Sprüheinrichtungen zur Beaufschlagung von zu reinigendem Gut auf.

Bei dem Betrieb von Umwälzpumpen und bei der Förderung von Spülflüssigkeit wird ein Geräusch erzeugt, das Benutzer der Haushalt-Geschirrspülmaschinen stören könnte. Insbesondere in besonderen Programmablaufsituationen, z.B. bei Ansteigen oder Abfallen der Spülflüssigkeitsmenge oder wechselnder Beschickungsrichtung entstehen Geräuschspitzen die besonders störend wirken.

Aus der DE 44 18 721 A ist Haushalt-Geschirrspülmaschine mit einer Umwälzpumpe, bekannt, bei der die Drehzahl der Umwälzpumpe regelbar ist, wobei anhand von Drehzahl- und Motorstromschwankungen auf eine nicht ordnungsgemäß fördernde Pumpe geschlossen wird, bspw. wenn ein Luft-Wassergemisch angesaugt wird.

Der Erfindung liegt daher die Aufgabe zugrunde, bei einer Haushalt-Geschirrspülmaschine der eingangs genannten Art auf einfache Art und Weise während des gesamten Programmablaufes auch in besonderen Programmablaufsituationen eine erhöhte Geräuschentwicklung und insbesondere die Entstehung von Geräuschspitzen zu vermeiden und damit ein konstant niedriges Geräusch zu halten.

Diese Aufgabe wird erfindungsgemäß dadurch gelöst, dass die Drehzahl der Umwälzpumpe regelbar ist und dass die Umwälzpumpe entsprechend des Flüssigkeitsniveaus ständig im Vollastbetrieb betrieben wird.

Dadurch, dass die Umwälzpumpendrehzahl und damit auch die Umwälzpumpenförderleistung regelbar ist, ist eine Anpassung der Umwälzpumpendrehzahl an den oben erwähnten Programmablauf und insbesondere an die besonderen Programmablaufsituationen möglich. Pumpen im Vollastbetrieb entwickeln ein gleichmäßiges und geringes Geräusch. Mit der Erfindung ist bei einer Haushalt-Geschirrspülmaschine der eingangs genannten Art auf einfache Art und Weise während des gesamten Programmablaufes auch in besonderen Programmablaufsituationen eine erhöhte Geräuschentwicklung und insbesondere die Entstehung von Geräuschspitzen vermieden, wodurch damit ein konstant niedriges Geräusch gehalten wird.

Eine der oben erwähnten besonderen Programmablaufsituationen ist das Befüllen der Haushalt-Geschirrspülmaschine. Aus der DE-OS 40 26 868 ist z.B. eine Haushalt-Geschirrspülmaschine bekannt, bei der das Befüllen der Haushalt-Geschirrspülmaschine so lange andauert, bis der Rundlauf der Umwälzpumpe erreicht ist, d.h. bis genügend Flüssigkeit eingefüllt ist, dass bei voller Pumpenleistung der Normalbetrieb gewährleistet ist. Diese Vorgehensweise wird üblicherweise dynamisches Befüllen genannt. Da die Umwälzpumpe bei einer dynamischen Befüllung z.B. nach der DE-OS 40 26 868 ständig mit voller Pumpenleistung betrieben wird, wird so lange der Rundlauf der Umwälzpumpe noch nicht erreicht ist, ein wesentlich höheres Geräusch, insbesondere durch Geräuschspitzen, entwickelt, als im Normalbetrieb mit ausreichender Flüssigkeitsmenge. Zur aufgabengemäßen Vermeidung von Geräuschspitzen gehört daher auch die Vermeidung einer erhöhten Geräuschentwicklung beim Befüllen. Nach einem bevorzugten Merkmal der Erfindung wird dies dadurch ausgeführt, dass die Drehzahl der Umwälzpumpe während des Befüllens entsprechend der ansteigenden Wassermenge auf Vollastbetrieb geregelt wird. Dadurch, dass die Drehzahl und damit die Förderleistung der Umwälzpumpe dem Wasserstand angepaßt wird, kommt es nicht zum Ansaugen von Luft und anderen denkbaren Störungen, die unweigerlich zu den genannten Geräuschspitzen führen und eine erhöhte Geräuschentwicklung während des Befüllens der erfindungsgemäßen Haushalt-Geschirrspülmaschine verursachen. Mit dieser Maßnahme wird beim Befüllen einer Haushalt-Geschirrspülmaschine der eingangs genannten Art auf einfache Art und Weise eine erhöhte Geräuschentwicklung vermieden.

Eine weitere der oben erwähnten besonderen Programmablaufsituationen ist bei einem Wechselbetrieb der Sprühebenen der Haushalt-Geschirrspülmaschine der Zeitpunkt des Wechsels zwischen den Sprühebenen. Haushalt-Geschirrspülmaschinen mit Wechselbetrieb der Sprühebenen sind seit langem bekannt, z.B. aus der DE-OS 24 28 991. Bei handelsüblichen Haushalt-Geschirrspülmaschinen werden die wenigstens zwei Sprüheinrichtungen gleichzeitig mit der von einer Umwälzpumpe geförderten Flüssigkeit beschickt. Bei der Haushalt-Geschirrspülmaschine nach der DE-OS 24 28 991 wird aber zur Erzielung eines gleichen oder besseren Reinigungsergebnisses wie bei den vorgeschilderten handelsüblichen Haushalt-Geschirrspülmaschinen jede Sprüheinrichtung wechselnd nacheinander mit der von einer Umwälzpumpe geförderten Flüssigkeit beschickt, um so den vollen Druck der Umwälzpumpe nur an einer Sprüheinrichtung wirken zu lassen und eine geringere Flüssigkeitsmenge und geringere Energie zum Umwälzen und auch zum Erwärmen der umgewälzten Flüssigkeit zu benötigen. Zur Durchführung eines derartigen Verfahrens der wechselweisen Beschickung der Sprüheinrichtungen von einer Umwälzpumpe werden Umsteuereinrichtungen verwendet. Beim Umschalten durch diese Umsteuereinrichtungen, üblicherweise so genannte Wasserweichen, ist es unvermeidlich, dass - wenn auch kurzzeitig - Spülflüssigkeit in beide Zuleitungen zu beiden Sprühebenen geliefert wird. Bei diesem kurzzeitigen, gleichzeitigen Zweiebenenbetrieb kommt es zu einer höheren Belastung der Umwälzpumpe, was zu einer erhöhten Geräuschentwicklung durch die Umwälzpumpe führt. Zur aufgabengemäßen Vermeidung von Geräuschspitzen gehört daher auch die Vermeidung einer erhöhten Geräuschentwicklung beim Wechsel von einer Sprüheinrichtung bzw. einer Gruppe von Sprüheinrichtungen zu einer weiteren Sprüheinrichtung bzw. Gruppe von Sprüheinrichtungen. Nach einem weiteren bevorzugten Merkmal der Erfindung wird dies dadurch ausgeführt, dass während des Wechsels von einer Sprüheinrichtung bzw. einer Gruppe von Sprüheinrichtungen zu einer weiteren Sprüheinrichtung bzw. Gruppe von Sprüheinrichtungen die Drehzahl der Umwälzpumpe reduziert wird. Durch die Reduzierung der Drehzahl der Umwälzpumpe bei jedem Wechsel der Beschickung der Sprühebenen wird einem kurzzeitigen Hochfahren der Drehzahl der Pumpe aufgrund des kurzzeitigen Zweiebenenbetriebes entgegengewirkt und damit einer erhöhten Geräuschentwicklung durch die Umwälzpumpe entgegengewirkt. Mit dieser Maßnahme wird beim Wechsel von einer Sprüheinrichtung bzw. einer Gruppe von Sprüheinrichtungen zu einer weiteren Sprüheinrichtung bzw. Gruppe von Sprüheinrichtungen bei einer Haushalt-Geschirrspülmaschine der eingangs genannten Art auf einfache Art und Weise eine erhöhte Geräuschentwicklung vermieden.

Eine weitere der oben erwähnten besonderen Programmablaufsituationen ist das Abpumpen der Spülflüssigkeit aus einer Haushalt-Geschirrspülmaschine. Aus der DE-OS 39 21 422 sind Haushalt-Geschirrspülmaschinen der eingangs genannten Art bekannt, bei denen während des Abpumpens in wenigstens einem Teilprogrammschritt die Umwälzpumpe und die zum Abpumpen vorgesehene Entleerungspumpe gleichzeitig betrieben werden. Der Betrieb der Umwälzpumpe hat den Zweck, den Eintritt der zum Zeitpunkt des Abpumpens verschmutzten Spülflüssigkeit in Messkammern, wie z.B. einen Niveaugeber, zu verhindern. Der Betrieb der Umwälzpumpe hält also den Flüssigkeitsstand auf einem, während des Abpumpens natürlich fallenden, dynamischen Niveau so lange bis sichergestellt ist, dass eine Schmutzverschleppung nicht mehr eintreten kann, d.h. auch das statische Niveau, das sich nach Abstellen der Umwälzpumpe einstellt, niedriger als z.B. der Eingang eines Niveaugebers. Diese Vorgehensweise wird üblicherweise dynamisches Abpumpen genannt. Da die Umwälzpumpe bei einem dynamischen Abpumpen ständig mit voller Pumpenleistung betrieben wird, wird sobald der Rundlauf der Umwälzpumpe durch die immer geringer werdende, umzuwälzende Flüssigkeit gestört ist, ein wesentlich höheres Geräusch, insbesondere durch Geräuschspitzen, entwickelt, als im Normalbetrieb mit ausreichender Flüssigkeitsmenge. Die Entleerungspumpe wird üblicherweise zeitgesteuert betrieben, wobei die Betriebsdauer der Entleerungspumpe, um keine Rückstände der schmutzigen Spülflüssigkeit zurückzulassen, auf das Abpumpen der größten möglichen Flüssigkeitsmenge ev. mit einem Zeitzuschlag ausgelegt ist. Da auch die Entleerungspumpe ständig mit voller Pumpenleistung betrieben wird, wird auch bei Betrieb dieser sobald deren Rundlauf die immer geringer werdende, abzupumpende Flüssigkeit gestört ist, ein wesentlich höheres Geräusch, insbesondere durch Geräuschspitzen, entwickelt. Durch die lange Betriebsdauer kommt es oft zu einem längeren Betrieb der Entleerungspumpe bei schon vollständig entleerter Haushalt-Geschirrspülmaschine, dem so genannten Trockenlauf, was eine besonders hohe Geräuschentwicklung zur Folge hat. Zur aufgabengemäßen Vermeidung von Geräuschspitzen gehört daher auch die Vermeidung einer erhöhten Geräuschentwicklung beim Abpumpen. Nach einem weiteren bevorzugten Merkmal der Erfindung wird dies dadurch ausgeführt, dass die Drehzahl der Umwälzpumpe entsprechend der fallenden Wassermenge auf Vollastbetrieb geregelt wird. Dadurch, dass die Drehzahl und damit die Förderleistung der Umwälzpumpe dem fallenden Flüssigkeitsniveau angepasst wird, kommt es nicht zum Ansaugen von Luft und anderen denkbaren Störungen, die unweigerlich zu den genannten Geräuschspitzen führen und eine erhöhte Geräuschentwicklung während des Abpumpen aus der erfindungsgemäßen Haushalt-Geschirrspülmaschine verursachen. Dadurch, dass bei der Regelung der Drehzahl der Umwälzpumpe erkannt wird, ob und wie stark das Flüssigkeitsniveau absinkt, ist auch eine Überprüfung des Betriebes und der Förderleistung der Entleerungspumpe möglich, wodurch die Betriebsdauer der Entleerungspumpe auf einen optimalen Wert eingestellt werden kann, wodurch ein unnötig langer Trockenlauf und die dabei besonders hohe Geräuschentwicklung vermieden wird. Mit dieser Maßnahme wird beim Abpumpen bei einer Haushalt-Geschirrspülmaschine der eingangs genannten Art auf einfache Art und Weise eine erhöhte Geräuschentwicklung vermieden.

Die Erfindung wird nachstehend anhand eines Ausführungsbeispieles einer Haushalt-Geschirrspülmaschine erläutert.

Eine erfindungsgemäße Haushalt-Geschirrspülmaschine weist einen Spülbehälter auf, in den zu reinigendes Gut, z.B. verschmutztes Geschirr und Besteck, üblicherweise in Geschirrkörbe eingefüllt wird. In dem Spülbehälter sind wenigstens zwei Sprüheinrichtungen angeordnet, die das zu reinigende Gut mit Spülflüssigkeit beaufschlagen. Diese Spülflüssigkeit, üblicherweise Spülflotte genannt, wird mittels einer Umwälzpumpe in Flüssigkeitszuleitungen zu den Sprüheinrichtungen gefördert, wie weiter unten beschrieben. Diese Umwälzpumpe wird beim Befüllen der Haushalt-Geschirrspülmaschine und Abpumpen aus der Haushalt-Geschirrspülmaschine zumindest zeitweise betrieben, wie ebenfalls weiter unten beschrieben.

Erfindungsgemäß ist die Drehzahl der Umwälzpumpe regelbar und wird entsprechend des Flüssigkeitsniveaus ständig im Vollastbetrieb betrieben. Dadurch, dass die Umwälzpumpendrehzahl und damit auch die Umwälzpumpenförderleistung regelbar ist, ist eine Anpassung der Umwälzpumpendrehzahl an den oben erwähnten Programmablauf und insbesondere an die besonderen Programmablaufsituationen möglich. Pumpen im Vollastbetrieb entwickeln ein gleichmäßiges und geringes Geräusch.

Das Befüllen der erfindungsgemäßen Haushalt-Geschirrspülmaschine in einem Teilprogrammabschnitt mit Flüssigkeitseinsatz erfolgt im Ausführungsbeispiel dadurch, dass die Haushalt-Geschirrspülmaschine zu Beginn eines Reinigungsprogrammabschnittes mit Flüssigkeitseinsatz bei nicht betriebener Umwälzpumpe mit etwa 3 Liter Wasser gefüllt wird, was üblicherweise als statisches Befüllen bezeichnet wird. Nun wird die Umwälzpumpe eingeschaltet und bei einer Drehzahl betrieben, die bei etwa 3 Liter Wasser einen Vollastbetrieb der Pumpe bedeutet. Entsprechend der während der Fortdauer des Befüllvorganges der Haushalt-Geschirrspülmaschine ansteigenden Wassermenge wird nun die Drehzahl der Umwälzpumpe so geregelt, dass sich immer ein Vollastbetrieb einstellt. Diese wird so lange fortgesetzt, bis die maximale Drehzahl der Umwälzpumpe erreicht ist. Da sich dann der Vollastbetrieb am eigentlichen Arbeitspunkt der Umwälzpumpe eingestellt hat, kann auch das Befüllen der Haushalt-Geschirrspülmaschine beendet werden. Dadurch, dass die Drehzahl und damit die Förderleistung der Umwälzpumpe dem Wasserstand angepasst wird, kommt es nicht zum Ansaugen von Luft und anderen denkbaren Störungen, die unweigerlich zu den genannten Geräuschspitzen führen und eine erhöhte Geräuschentwicklung während des Befüllens der erfindungsgemäßen Haushalt-Geschirrspülmaschine verursachen. Mit dieser Maßnahme wird beim Befüllen einer Haushalt-Geschirrspülmaschine der eingangs genannten Art auf einfache Art und Weise eine erhöhte Geräuschentwicklung vermieden.

Bei der Haushalt-Geschirrspülmaschine nach dem Ausführungsbeispiel wird ein wechselweises Beschicken von wenigstens zwei Sprüheinrichtungen bzw. Gruppen von Sprüheinrichtungen - von Sprühebenen - durch die Umwälzpumpe durchgeführt, um so den vollen Druck der Umwälzpumpe nur an einer Sprüheinrichtung wirken zu lassen und eine geringere Spülflüssigkeitsmenge und geringere Energie zum Umwälzen und auch zum Erwärmen der umgewälzten Spülflüssigkeit zu benötigen. Zur Durchführung eines derartigen Verfahrens der wechselweisen Beschickung der Sprüheinrichtungen von einer Umwälzpumpe werden Umsteuereinrichtungen verwendet. Aus der EP-OS 05 47 011 ist beispielsweise bekannt, mittels eines hydraulisch betätigten, zwischen Flüssigkeitszuleitungen zu den Sprüheinrichtungen angeordneten Klappenventils wechselweise eine der Flüssigkeitszuleitungen zu öffnen und gleichzeitig die anderen Flüssigkeitszuleitungen zu schließen. Aus der EP-OS 02 37 994 ist weiterhin beispielsweise bekannt, mittels einer Kugel im Druckstutzen der Umwälzpumpe, die bei Unterbrechung des Betriebes der Umwälzpumpe die Lage ändert, wechselweise eine der Flüssigkeitszuleitungen zu öffnen und die andere gleichzeitig zu schließen. Ferner ist beispielsweise aus dem EP-PS 05 85 905 bekannt, mittels einer motorisch angetriebenen, sich drehenden horizontalen Scheibe mit Bohrungen einen oder mehrere Zugänge zu Flüssigkeitszuleitungen zu öffnen und andere zu schließen. Beim Umschalten der Klappe nach der EP-OS 05 47 011 wie auch bei der Lageänderung der Kugel nach der EP-OS 02 37 994 und auch beim Verdrehen der Scheibe von einer Bohrung zu einer nächsten Bohrung nach dem EP-PS 05 85 905 kommt es unweigerlich zu einem kurzzeitigen Beschicken der Spülflüssigkeit in beide Zuleitungen. Bei diesem kurzzeitigen, gleichzeitigen Zweiebenenbetrieb kommt es zu einem kurzzeitigen Hochfahren der Drehzahl der Umwälzpumpe, was zu einer erhöhten Geräuschentwicklung durch die Umwälzpumpe führt. Um beim Umschalten durch Umsteuereinrichtungen, z.B. wie oben geschildert, eine bei dem unvermeidlichen kurzzeitigen, gleichzeitigen Zweiebenenbetrieb erhöhten Geräuschentwicklung durch die Umwälzpumpe zu vermeiden, wird die Drehzahl der Umwälzpumpe während des Wechsels von einer Sprüheinrichtung bzw. einer Gruppe von Sprüheinrichtungen zu einer weiteren Sprüheinrichtung bzw. Gruppe von Sprüheinrichtungen reduziert und damit einem kurzzeitigen Hochfahren der Drehzahl der Umwälzpumpe entgegengewirkt. Mit dieser Maßnahmen wird bei einer Haushalt-Geschirrspülmaschine der eingangs genannten Art beim Wechsel von einer Sprüheinrichtung bzw. einer Gruppe von Sprüheinrichtungen zu einer weiteren Sprüheinrichtung bzw. Gruppe von Sprüheinrichtungen auf einfache Art und Weise eine erhöhte Geräuschentwicklung vermieden.

Beim Abpumpen der verschmutzten Spülflüssigkeit aus der erfindungsgemäßen Haushalt-Geschirrspülmaschine am Ende eines Teilprogrammabschnittes mit Flüssigkeitseinsatz wird die Umwälzpumpe zumindest zeitweise betrieben. Das Abpumpen der Spülflüssigkeit aus der Haushalt-Geschirrspülmaschine selbst wird durch eine Entleerungspumpe ausgeführt. Das Abpumpen erfolgt im Ausführungsbeispiel dadurch, dass am Ende eines Teilprogrammabschnittes mit Flüssigkeitseinsatz, z.B. dem Teilprogrammabschnitt "Reinigen" die Entleerungspumpe in Betrieb genommen wird und die Umwälzpumpe noch weiter im Vollastbetrieb am eigentlichen Arbeitspunkt betrieben wird, was üblicherweise als dynamisches Abpumpen bezeichnet wird. Der Betrieb der Umwälzpumpe beim Abpumpvorgang hat den Zweck, den Eintritt der zum Zeitpunkt des Abpumpens sehr verschmutzten Spülflüssigkeit in z.B. einen Niveaugeber zu verhindern. Entsprechend der sich während der Fortdauer des Abpumpvorganges der Haushalt-Geschirrspülmaschine verringernden Spülflüssigkeitsmenge wird nun die Drehzahl der Umwälzpumpe so geregelt, dass sich erfindungsgemäß immer ein Vollastbetrieb einstellt, d.h. sie wird immer niedriger eingestellt. Dies wird so lange fortgesetzt, bis eine minimale Drehzahl der Umwälzpumpe erreicht ist. Dadurch, dass die Drehzahl und damit die Förderleistung der Umwälzpumpe dem fallenden Flüssigkeitsniveau angepasst wird, kommt es nicht zum Ansaugen von Luft und anderen denkbaren Störungen, die unweigerlich zu den genannten Geräuschspitzen führen und eine erhöhte Geräuschentwicklung während des Abpumpen aus der erfindungsgemäßen Haushalt-Geschirrspülmaschine verursachen. Danach wird die Entleerungspumpe alleine über eine geregelte Betriebsdauer betrieben. Diese Regelung der restlichen Betriebsdauer erfolgt aufgrund der bei der Regelung der Drehzahl der Umwälzpumpe erkannten Flüssigkeitsniveauabsenkung, wodurch ein unnötig langer Trockenlauf und die dabei besonders hohe Geräuschentwicklung der Entleerungspumpe vermieden wird. Mit dieser Maßnahme wird bei einer Haushalt-Geschirrspülmaschine der eingangs genannten Art beim Abpumpen auf einfache Art und Weise eine erhöhte Geräuschentwicklung vermieden.

Mit der Erfindung ist bei einer Haushalt-Geschirrspülmaschine der eingangs genannten Art auf einfache Art und Weise während des gesamten Programmablaufes auch in besonderen Programmablaufsituationen eine erhöhte Geräuschentwicklung und insbesondere die Entstehung von Geräuschspitzen vermieden, wodurch damit ein konstant niedriges Geräusch gehalten wird.

## Patentansprüche

1. Haushalt-Geschirrspülmaschine mit einer Umwälzpumpe, bei der die Drehzahl der Umwälzpumpe regelbar ist, **dadurch gekennzeichnet, dass** die Umwälzpumpe entsprechend des Flüssigkeitsniveaus ständig im Vollastbetrieb betrieben wird.

2. Haushalt-Geschirrspülmaschine nach Anspruch 1, **dadurch gekennzeichnet, dass** die Umwälzpumpe zumindesten zeitweise beim Befüllen der Haushalt-Geschirrspülmaschine betrieben wird, wobei die Drehzahl der Umwälzpumpe entsprechend der ansteigenden Wassermenge auf Vollastbetrieb geregelt wird.

3. Haushalt-Geschirrspülmaschine nach Anspruch 1, **dadurch gekennzeichnet, dass** während des Wechsels von einer Sprüheinrichtung bzw. einer Gruppe von Sprüheinrichtungen zu einer weiteren Sprüheinrichtung bzw. Gruppe von Sprüheinrichtungen die Drehzahl der Umwälzpumpe entsprechend des wechselnden Fördervolumens geregelt wird

4. Haushalt-Geschirrspülmaschine nach Anspruch 1, **dadurch gekennzeichnet, dass** die Umwälzpumpe wenigstens zeitweise beim Abpumpen der Reinigungsflüssigkeit aus der Haushalt-Geschirrspülmaschine betrieben wird, wobei die Drehzahl der Umwälzpumpe entsprechend der fallenden Wassermenge auf Vollastbetrieb geregelt wird.

## Claims

1. Domestic dishwashing machine with a circulating pump in which the rotational speed of the circulating pump can be regulated, **characterised in that** the circulating pump is operated constantly in full load operation in correspondence with the liquid level.

2. Domestic dishwashing machine according to claim 1, **characterised in that** the circulating pump is operated at least partly during filling of the domestic dishwashing machine, where in the rotational speed of the circulating pump is regulated to full load operation in correspondence with the increasing water quantity.

3. Domestic dishwashing machine according to claim 1, **characterised in that** during the change from one spray device or one group of spray devices to another spray device or group of spray devices the rotational speed of the circulating pump is regulated in correspondence with the changing conveying volume.

4. Domestic dishwashing machine according to claim 1, **characterised in that** the circulating pump is operated at least periodically during pumping of the cleaning liquid out of the domestic dishwashing machine, wherein the rotational speed of the circulating pump is regulated to full load operation in correspondence with the decreasing water quantity.

## Revendications

1. Lave-vaisselle ménager comprenant une pompe de recirculation, sur laquelle le régime de la pompe est réglable, **caractérisé en ce que** la pompe de recirculation est exploitée continuellement en mode pleine charge en fonction du niveau de liquide.

2. Lave-vaisselle ménager selon la revendication 1, **caractérisé en ce que** la pompe de recirculation est exploitée au moins temporairement lors du remplissage du lave-vaisselle ménager, le régime de la pompe de recirculation étant réglé sur le mode pleine charge en fonction de la quantité d'eau croissante.

3. Lave-vaisselle ménager selon la revendication 1, **caractérisé en ce que**, pendant le remplacement d'un dispositif de pulvérisation ou groupe de dispositifs de pulvérisation par un autre dispositif de pulvérisation ou groupe de dispositifs de pulvérisation, le régime de la pompe de recirculation est réglé en fonction du débit variable.

4. Lave-vaisselle ménager selon la revendication 1, **caractérisé en ce que** la pompe de recirculation est exploitée au moins temporairement lors du pompage du liquide de nettoyage hors du lave-vaisselle ménager, le régime de la pompe de recirculation étant réglé sur le mode pleine charge en fonction de la quantité d'eau décroissante.
